# EUROPÄISCHE PATENTSCHRIFT

(11) **EP 3 690 231 B1**
(45) Veröffentlichungstag und Bekanntmachung des Hinweises auf die Patenterteilung: **13.10.2021**
(21) Anmeldenummer: 19154732.2
(22) Anmeldetag: 31.01.2019
(51) Int. Cl.: F03D 1/06

(54) **ANBAUELEMENT FÜR EIN WINDENERGIEANLAGENROTORBLATT, ANORDNUNG SOWIE WINDENERGIEANLAGENROTORBLATT**
ATTACHMENT ELEMENT FOR A WIND ENERGY ASSEMBLY ROTOR BLADE, ASSEMBLY AND WIND ENERGY ASSEMBLY ROTOR BLADE
ÉLÉMENT DE CONSTRUCTION POUR UNE PALE DE ROTOR D'ÉOLIENNE, DISPOSITIF AINSI QUE PALE DE ROTOR D'ÉOLIENNE

(43) Veröffentlichungstag der Anmeldung: 05.08.2020
(73) Patentinhaber: Nordex Energy SE & Co. KG, 22419 Hamburg (DE)
(72) Erfinder: Hellwig, Lutz, 17094 Burg Stargard (DE)
(74) Vertreter: Epping - Hermann - Fischer

(56) Entgegenhaltungen:
- EP-A1- 2 631 467
- EP-A1- 3 205 874
- WO-A1-2014/048437
- US-A1- 2011 142 637
- US-B1- 7 909 576

## Beschreibung

Die Erfindung betrifft ein Anbauelement für ein Windenergieanlagenrotorblatt, welches einen Verzahnungsabschnitt zum Beeinflussen einer aerodynamischen Eigenschaft des Windenergieanlagenrotorblatts und einen Befestigungsabschnitt zum Anbringen auf einer Oberfläche des Windenergieanlagenrotorblatts aufweist. Die Erfindung betrifft auch eine Anordnung mit zwei Anbauelementen und ein Windenergieanlagenrotorblatt.

Windenergieanlagen werden verwendet, um Energie des Windes in elektrische Energie umzuwandeln. Dazu weisen sie herkömmlich ein oder mehrere Rotorblätter (Windenergieanlagenrotorblätter) auf. Aerodynamisch wirksame Anbauelemente sind aus dem Stand der Technik bekannt und werden eingesetzt, um die das Windenergieanlagenrotorblatt im Betrieb umströmende Luft gezielt zu beeinflussen. Bekannt sind beispielsweise Anbauelemente, die entlang der Profilendkante angeordnet sind und die aerodynamischen Eigenschaften des Blattes mit Hilfe von Zacken verbessern. Diesbezüglich sei beispielsweise auf die Veröffentlichungen US 2011/142637 A1,

DE 10 2011 052 930 A1 oder WO 2017/148669 A1 verwiesen.

Es ist wünschenswert, ein Konzept für ein Anbauelement anzugeben, welches zu einer besonders effizienten Montage beiträgt.

Gemäß einem Aspekt wird ein Anbauelement für ein Windenergieanlagenrotorblatt offenbart. Das Anbauelement weist einen aerodynamisch wirksamen Abschnitt zum Beeinflussen einer aerodynamischen Eigenschaft des Windenergieanlagenrotorblatts auf. Das Anbauelement weist einen streifenförmigen Befestigungsabschnitt auf, der ausgebildet ist, auf einer Oberfläche des Windenergieanlagenrotorblatts angebracht zu werden. Insbesondere wird das Anbauelement im Befestigungsabschnitt mit der Oberfläche verklebt. Der streifenförmige Befestigungsabschnitt weist ein erstes Ende mit einem ersten Kopplungsabschnitt auf. Der erste Kopplungsabschnitt weist entweder einen Positionierstift auf, der in eine Positionierausnehmung eines Kopplungsabschnitts eines weiteren Anbauelements einführbar ist, so dass das Anbauelement schwenkbar mit dem weiteren Anbauelement koppelbar ist. Alternativ weist der erste Kopplungsabschnitt eine Positionierausnehmung auf, die zur Aufnahme eines Positionierstifts eines Kopplungsabschnitts eines weiteren Anbauelements ausgebildet ist, so dass das weitere Anbauelement schwenkbar mit dem Anbauelement koppelbar ist.

Unter dem aerodynamisch wirksamen Abschnitt wird ein Abschnitt verstanden, der eine spezielle Formgebung aufweist, die die Aerodynamik des Rotorblatts beeinflusst. Beispielsweise handelt es sich um einen Verzahnungsabschnitt, d.h. sogenannte "Serrations". Anstelle eines Verzahnungsabschnitts der Anbauelemente sind auch Ausführungen von Abschnitten mit Wellenlinie oder auch geradlinig verlaufende Geometrien mit einer Verjüngung zu einer dem Befestigungsabschnitt abgewandten Seite denkbar.

Wie bereits angedeutet werden Anbauelemente mit aerodynamisch wirksamen Abschnitten, etwa mit Serrations, typischerweise entlang der Profilendkante eines Windenergieanlagenrotorblatts angeordnet und mit diesem verbunden. Aufgrund des meist geschwungenen Verlaufs der Profilendkante und der großen Längen von Windenergieanlagenrotorblättern werden mehrere Anbauelemente verwendet und benachbart zueinander angeordnet.

Der Erfinder hat erkannt, dass die Montage von zumindest zwei Anbauelementen durch die erfindungsgemäße Ausgestaltung mit zumindest einem Kopplungsabschnitt erheblich verbessert ist. So kann das beschriebene Anbauelement bei der Montage einfach mit einem weiteren Anbauelement an zumindest einem Ende gekoppelt werden, um das Anbauelement vor der endgültigen Befestigung am Rotorblatt, etwa der Verklebung, auszurichten und zu positionieren.

Unter anderem zur Gewährleistung eines gleichmäßigen Abstands der Anbauelemente zueinander und auch zur Profilendkante wird eine Kopplung mittels Positionierstift (auch Fixierstift) genutzt, der im gekoppelten Zustand in einer korrespondierenden Positionierausnehmung eine Schwenkbewegung zur Anpassung der Anbauelemente an den gekrümmten Verlauf der Profilendkante zulässt. Die Kopplungsabschnitte mit Positionierstift und Positionierausnehmung bilden somit Drehgelenke aus.

Beispielsweise wird der Fixierstift des Anbauelements in die Positionierausnehmung eines weiteren Anbauelements eingesetzt. Das weitere Anbauelement kann bereits fest mit dem Rotorblatt verbunden sein. Die Montage ist alternativ auch andersherum denkbar, d.h. dass ein Anbauelement mit der Positionierausnehmung auf ein (evtl. bereits montiertes) Anbauelement mit Fixierstift aufgesetzt wird. Durch Schwenken um die Fixierung, d.h. um die Bohrungsachse oder Längsachse des Positionierstifts, kann das Anbauelement leicht an der Profilendkante ausgerichtet und montiert werden. Die Lage der beiden Anbauelemente zueinander (beispielsweise Eckpunkt zu Eckpunkt) wird dabei ausgerichtet.

Die zwischen den beiden Anbauelementen möglicherweise entstandenen Spalte können mit Dichtmaterial gefüllt und gegebenenfalls auf der Außenseite, etwa den Oberseiten abgezogen werden.

Gemäß Ausführungsformen weist der streifenförmige Befestigungsabschnitt ein dem ersten Ende gegenüberliegendes zweites Ende mit einem zweiten Kopplungsabschnitt auf. Der zweite Kopplungsabschnitt weist entweder einen Positionierstift auf, der in eine Positionierausnehmung eines Kopplungsabschnitts eines weiteren Anbauelements einführbar ist, so dass das Anbauelement schwenkbar mit dem weiteren Anbauelement koppelbar ist. Alternativ weist der zweite Kopplungsabschnitt eine Positionierausnehmung auf, die zur Aufnahme eines Positionierstifts eines Kopplungsabschnitts eines weiteren Anbauelements ausgebildet ist, so dass das weitere Anbauelement schwenkbar mit dem Anbauelement koppelbar ist. Damit lassen sich Ketten mehrerer Anbauelemente positionieren und am Rotorblatt festlegen. Je nach Ausbildung des ersten und/oder zweiten Kopplungsabschnitts können mehrere Anbauelemente der Reihe nach mittels korrespondierenden Positionierstifte und - ausnehmungen gekoppelt werden.

Bevorzugt weisen der erste Kopplungsabschnitt einen Positionierstift und der zweite Kopplungsabschnitt eine Positionierausnehmung auf. Dadurch können mehrere gleichartige Anbauelemente der Reihe nach gekoppelt und verlegt werden.

Die Lage des Drehgelenks ist durch die Anordnung von Positionierstift und Positionierausnehmung bestimmt. Denkbar sind insbesondere folgende Varianten, die abhängig vom Krümmungsverlauf des Bereichs, in welchem die Anbauelemente angebracht werden, vorteilhaft sind. Damit können montierte Anbauelemente beispielsweise optimal der Krümmung der Endkante am Rotorblatt folgen.

Gemäß einer Ausführungsform sind der erste und/oder der zweite Kopplungsabschnitt derart ausgebildet sind, dass der Positionierstift und/oder die Positionierausnehmung eines oder beider Kopplungsabschnitte im Bereich einer dem aerodynamisch wirksamen Abschnitt abgewandten Längsseite des Befestigungsabschnitts angeordnet sind.

Gemäß einer Ausführungsform sind der erste und/oder der zweite Kopplungsabschnitt derart ausgebildet, dass der Positionierstift und/oder die Positionierausnehmung eines oder beider Kopplungsabschnitte im Bereich des aerodynamisch wirksamen Abschnitts angeordnet sind. Bei Bedarf kann der Drehpunkt beispielsweise auf Höhe eines Zahnfußes oder Wellentals verschoben werden. Dies würde dann aber eine Anpassung der Freischnitte an den Enden der Serrations bzw. Wellen erfordern.

Gemäß einer Ausführungsform sind der erste und/oder der zweite Kopplungsabschnitt derart ausgebildet, dass der Positionierstift und/oder die Positionierausnehmung eines oder beider Kopplungsabschnitte in einem mittleren Bereich zwischen dem aerodynamisch wirksamen Abschnitt und einer dem aerodynamisch wirksamen Abschnittabgewandten Längsseite des Befestigungsabschnitts angeordnet sind. Dies eignet sich beispielsweise für eine geradlinige Anordnung zweier benachbarter Anbauelemente.

Gemäß einer Ausführungsform weist der erste Kopplungsabschnitt und/oder der zweite Kopplungsabschnitt einen Positionierstift auf, der eine Sollbruchstelle aufweist. Die Verbindungen der Anbauelemente mit der Oberfläche des Rotorblatts, typischerweise Klebeverbindungen, werden im Betrieb stark beansprucht und sind jahrelang Wind und Wetter ausgesetzt. Besondere Schwierigkeiten bereiten die im Betrieb eines Windenergieanlagenrotorblatts auftretenden Verformungen des Rotorblatts. Dabei verschieben bzw. bewegen sich die Anbauelemente zumindest in gewissem Rahmen relativ zueinander. Um beispielsweise ein Absprengen der gekoppelten Anbauelemente im Betrieb aufgrund der Bewegungen zu vermeiden, kann ein Positionierstift an der Sollbruchstelle brechen und gegebenenfalls abscheren. Damit werden Bewegungen der Anbauelemente relativ zueinander ermöglicht.

Die Sollbruchstelle ist bevorzugt in einem Bereich einer Oberfläche des ersten Kopplungsabschnitts ausgebildet, von der der Positionierstift absteht. Dies begünstigt das Abscheren.

Gemäß einer Ausführungsform weist der erste Kopplungsabschnitt und/oder der zweite Kopplungsabschnitt einen Positionierstift auf, der ausgebildet ist nach dem Einführen in eine entsprechende Positionierausnehmung eines weiteren Anbauelements mit dem entsprechenden Kopplungsabschnitt des weiteren Anbauelements zu verrasten oder zu verklemmen. Beispielsweise hat der Positionierstift einen Kopf mit im Vergleich zur Positionierausnehmung vergrößertem Durchmesser, sodass der Stift nach dem Einführen in der Ausnehmung verrasten und/oder verklemmen kann.

Gemäß einer Ausführungsform ist der Positionierstift des ersten und/oder zweiten Kopplungsabschnitts geschlitzt. Dies ermöglicht eine verrastende oder klemmende Kopplung. Die zwei Stifthälften sind beispielsweise so gespreizt, dass diese sich in der Positionierausnehmung verklemmen.

Gemäß einer Ausführungsform weisen der erste Kopplungsabschnitt und/oder der zweite Kopplungsabschnitt mehrere Positionierstifte und/oder Positionierausnehmungen auf, wobei - wenn Positionierstifte vorgesehen sind, die Positionierstifte jeweils eine Sollbruchstelle aufweisen. Beispielsweise weisen der erste Kopplungsabschnitt mehrere Positionierstifte und der zweite Kopplungsabschnitt korrespondierend dazu mehrere Positionierausnehmungen auf. Beispielsweise sind drei Positionierstifte vorgesehen, die entsprechend der obigen Ausführungsformen angeordnet sind. Beispielsweise ist bei einem Kopplungsabschnitt jeweils ein Stift im Bereich der der Verzahnung abgewandten Längsseite des Befestigungsabschnitts, mittig und im Bereich der Verzahnung angeordnet. Entsprechend können an einem Kopplungsabschnitt die Positionierausnehmungen vorgesehen sein. Je nach gewünschter Ausbildung eines Drehgelenks werden dann bis auf einen Positionierstift alle restlichen Positionierstifte mittels der Sollbruchstelle einfach abgebrochen. Dadurch können die Kopplungsabschnitte der Anbauelemente einheitlich gefertigt werden, wobei dennoch bei der Montage unterschiedliche Drehgelenke je nach Verlauf der Profilendkante wählbar sind. Diese Ausführungsform ermöglicht somit eine kostengünstige Herstellung bei gleichzeitiger Montageflexibilität.

Gemäß einer weiteren Ausführungsform sind der erste und/oder der zweite Kopplungsabschnitt ausgebildet, in einem mit einem entsprechenden Kopplungsabschnitt des weiteren Anbauelements gekoppelten Zustand einen Überlappungsbereich auszubilden. Dies trägt zu einer effizienten Kopplung bei, wobei zwei gekoppelte Anbauelemente aneinander abgleiten können beim Verschwenken. Zudem wird ein durchgehender Dichtspalt zwischen beiden Anbauelementen vermieden.

Gemäß einer weiteren Ausführungsform sind der erste Kopplungsabschnitt als eine erste Lasche und der zweite Kopplungsabschnitt als eine zweite Lasche ausgebildet, die jeweils eine im Vergleich zum restlichen Befestigungsabschnitt verringerte Dicke aufweisen. Dadurch können zwei Anbauelemente so aneinander angeordnet und gekoppelt werden, dass deren Oberseiten und/oder Unterseiten bündig verlaufen. Mit anderen Worten sind die beiden Kopplungsabschnitte so ausgebildet, dass eine gemeinsame, im Wesentlichen ebene Oberseite bzw. Unterseite gebildet ist.

Die beiden Laschen erstrecken sich beispielsweise vom Befestigungsabschnitt ab, wobei bei der einen Lasche die Oberseite bündig zum restlichen Befestigungsabschnitt verläuft, während bei der anderen Lasche die Unterseite bündig zum restlichen Befestigungsabschnitt verläuft. Mit anderen Worten ist der Befestigungsabschnitt am einen Ende von der Oberseite und am anderen Ende von der Unterseite ausgespart.

Gemäß einem weiteren Aspekt wird eine Anordnung für ein Windenergieanlagenrotorblatt offenbart, die zwei Anbauelemente nach einer der zuvor beschriebenen Ausführungsformen aufweist. Die beiden Anbauelemente sind angrenzend aneinander angeordnet. Ein Kopplungsabschnitt des einen Anbauelements ist mit einem Kopplungsabschnitt des weiteren Anbauelements derart gekoppelt, dass ein Positionierstift in eine korrespondierende Positionierausnehmung eingeführt ist.

Dadurch sind im Wesentlichen die zuvor genannten Vorteile und Funktionen ermöglicht. Die oben beschriebenen Ausführungsformen gelten analog für die beiden Anbauelemente, beispielsweise die überlappende Kopplung. Selbstverständlich sind Anordnungen mit einer Mehrzahl von solchen Anbauelementen denkbar. Die Anbauelemente müssen sich auch nicht exakt gleichen, lediglich die Kopplungsabschnitte müssen entsprechend wie beschrieben ausgebildet sein, um die Montagevorteile zu ermöglichen.

Gemäß einer Ausführungsform sind ein oder mehrere (Dicht)Räume zwischen den beiden gekoppelten Anbauelementen mit einem Dicht- und/oder Klebstoff ausgefüllt. Dies begünstigt die aerodynamischen und/oder aeroakustischen Eigenschaften.

Gemäß einer Ausführungsform sind die beiden gekoppelten Anbauelemente im Bereich der angrenzenden Enden an ihren Außenseiten (auch Oberseiten) mit einer Dichtfolie überzogen. Die Dichtfolie deckt beispielsweise die Nahtstelle, etwa einen Spaltbereich oder Überlappungsbereich, vollständig ab. Die Dichtfolie erstreckt sich demnach von dem einen Anbauelement über den Kopplungsbereich hinweg auf das andere Anbauelement. Durch die entlang dem Koppelbereich, etwa der Nahtstelle, mit hoher Geschwindigkeit strömende Luft kann ein typischerweise dauerelastisches, eingebrachtes Dichtmaterial aus dem Bereich der Nahtstelle herausgedrückt (bzw. gezogen) werden, so dass das Dichtmaterial wie ein Faden, evtl. in verschiedenen Dicken, an der Nahtstelle entsteht, der sich dann im Verlauf der Zeit lösen, im ungünstigsten Fall an anderen Bereichen des Rotorblattes hängen bleiben und unter Umständen dort Geräusche verursachen kann. Abgesehen davon beeinträchtigen solche flatternden Dichtmaterial-Fäden die Optik. Das Herausziehen des Dichtmaterials wird zudem durch breitere Nahtstellen zwischen den Anbauelementen unterstützt. Diese Nachteile werden durch Vorsehen einer Dichtfolie vermieden. Darüber hinaus wirkt der beschriebene Koppelmechanismus mittels Stift und Ausnehmung dem Ausbilden von Dichtfäden entgegen, da breitere Abstände vermieden werden können und zu nahezu gleichmäßigen Abständen bei mehreren gekoppelten Anbauelementen im Nahtbereich beigetragen wird.

Des Weiteren wird ein Windenergieanlagenrotorblatt offenbart. Das Windenergieanlagenrotorblatt weist eine Profilendkante, und zumindest ein Anbauelement nach einer zuvor beschriebenen Ausführungsform auf. Das Anbauelement ist mittels des Befestigungsabschnitts entlang der Profilendkante mit einer Oberfläche des Windenergieanlagenrotorblatts verbunden.

Das Windenergieanlagenrotorblatt ermöglicht die vorgenannten Vorteile und Funktionen. Wiederrum gilt das mit Bezug zu einem oder mehreren Anbauelementen oben Geschriebene analog.

Selbstverständlich können zwei oder mehr Anbauelemente wie oben beschrieben vorgesehen sein.

Weitere Vorteile, Merkmale und Weiterbildungen ergeben sich aus der nachfolgenden, in Verbindung mit den Figuren erläuterten Beschreibung von Ausführungsbeispielen. Gleiche, gleichartige oder gleichwirkende Elemente können in den Figuren mit den gleichen Bezugszeichen versehen sein.

In den Figuren zeigen:
Figur 1 eine schematische Darstellung einer Windenergieanlage gemäß einem Ausführungsbeispiel,
Figur 2 eine schematische Darstellung eines Rotorblatts der Windenergieanlage, und
Figur 3 eine schematische Darstellung eines Rotorblatts mit daran angeordneten Anbauelementen,
Figur 4 eine vergrößerte, schematische Darstellung des Rotorblatts mit zwei angrenzenden Anbauelementen,
Figur 5 eine Anordnung zweier überlappender Anbauelemente,
Figur 6 eine schematische Schnittansicht zweier gekoppelter Anbauelemente gemäß einem Ausführungsbeispiel der Erfindung,
Figur 7 eine schematische Schnittansicht eines Anbauelements der Figur 6 mit einem Positionierstift,
Figur 8 eine schematische Draufsicht auf die beiden gekoppelten Anbauelemente der Figur 6,
Figur 9 eine Draufsicht auf die beiden Anbauelemente der Figur 6 im am Rotorblatt befestigten Zustand,
Figur 10 eine perspektivische Ansicht der Anordnung gemäß Figur 9 von unten,
Figuren 11 bis 13 schematische Ansichten von gekoppelten Anbauelementen mit unterschiedlichen Koppelpositionen gemäß weiteren Ausführungsbeispielen der Erfindung, und
Figuren 14 und 15 schematische Darstellungen zweier gekoppelter Anbauelemente mit unterschiedlichen Koppelpositionen.

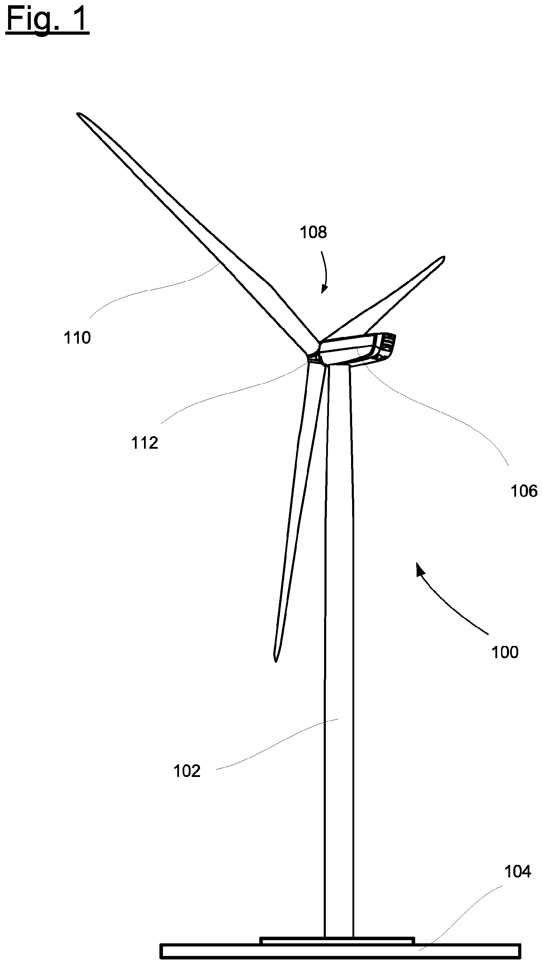

Figur 1 zeigt eine schematische Darstellung einer Windenergieanlage 100. Die Windenergieanlage 100 weist einen Turm 102 auf. Der Turm 102 ist mittels eines Fundaments 104 auf einem Untergrund befestigt. An einem dem Untergrund gegenüberliegenden Ende des Turms 102 ist eine Gondel 106 drehbar gelagert. Die Gondel 106 weist beispielsweise einen Generator auf, der über eine Rotorwelle (nicht gezeigt) mit einem Rotor 108 gekoppelt ist. Der Rotor 108 weist ein oder mehrere (Windenergieanlagen)Rotorblätter 110 auf, die an einer Rotornabe 112 angeordnet sind.

Der Rotor 108 wird im Betrieb durch eine Luftströmung, beispielsweise Wind, in Rotation versetzt. Diese Rotationsbewegung wird über die Rotorwelle und gegebenenfalls ein Getriebe auf den Generator übertragen. Der Generator wandelt die kinetische Energie des Rotors 108 in elektrische Energie um.

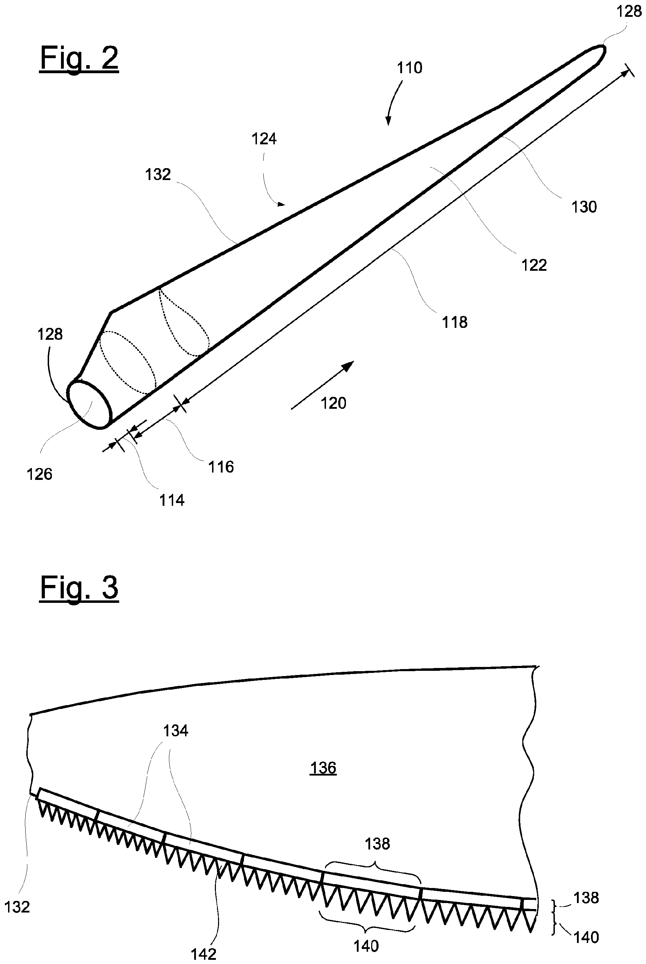

Figur 2 zeigt ein exemplarisches Windenergieanlagenrotorblatt 110. Das Rotorblatt 110 hat die Form eines herkömmlichen Rotorblattes und hat einen Rotorblattwurzelbereich 114, der der Rotornabe 112 zugewandt bzw. zugeordnet ist. Der Rotorblattwurzelbereich 114 hat typischerweise einen im Wesentlichen kreisrunden Querschnitt. An den Rotorblattwurzelbereich 114 schließen sich ein Übergangsbereich 116 und ein Profilbereich 118 des Rotorblatts 110 an. Das Rotorblatt 110 hat eine Längsachse 120 sowie eine Druckseite 122 und eine gegenüberliegende Saugseite 124. Das Rotorblatt 110 ist im Inneren im Wesentlichen hohl ausgebildet. Das Rotorblatt 110 hat ein blattwurzelseitiges Ende 126 und ein blattspitzenseitiges Ende 128. Das Rotorblatt 110 hat eine Profilnasenkante 130 und eine Profilendkante 132.

Figur 3 zeigt eine schematische Ansicht eines Rotorblatts 110, welches mehrere Anbauelemente 134 aufweist, die entlang der Profilendkante 132 an der äußeren Oberfläche 136 (Saug- oder Druckseite) des Rotorblatts 110 der Reihe nach befestigt sind. Die Anbauelemente 134 gleichen sich im prinzipiellen Aufbau derart, dass diese einen streifenförmigen Befestigungsabschnitt 138 und einen Verzahnungsabschnitt 140 mit mehreren Zähnen 142 haben. Im Befestigungsabschnitt 138 sind die Anbauelemente 134 mit der Oberfläche 136 verbunden, etwa verklebt, während die Verzahnung 140 (weitestgehend) über die Profilendkante 132 übersteht. Wie dargestellt, kann auch der Befestigungsabschnitt 138 leicht über die Profilendkante 132 überstehen. Die Anbauelemente 134 sind als dünne, plattenartige Elemente einstückig ausgebildet, das heißt Befestigungsabschnitt 138 und Verzahnung 140 sind als ein Teil ausgebildet. Es sind jedoch auch mehrteilige Ausgestaltungen denkbar. Die konkreten Ausgestaltungen der Verzahnung 140 (etwa hinsichtlich Zahnbreite, Zahnhöhe etc.), der Längen der einzelnen Anbauelemente 134, der Befestigungsabschnitte 138 sowie die exakte Positionierung an der Oberfläche 136 können variieren, etwa je nach Abschnitt entlang der Längsachse 120 oder Verlauf der Profilendkante 132. Die Anbauelemente 134 sind aerodynamisch wirksam und verbessern die Strömungseigenschaften des Rotorblattes 110, so dass ein Betrieb einer Windenergieanlage 100 mit verringerter Geräuschemission möglich ist.

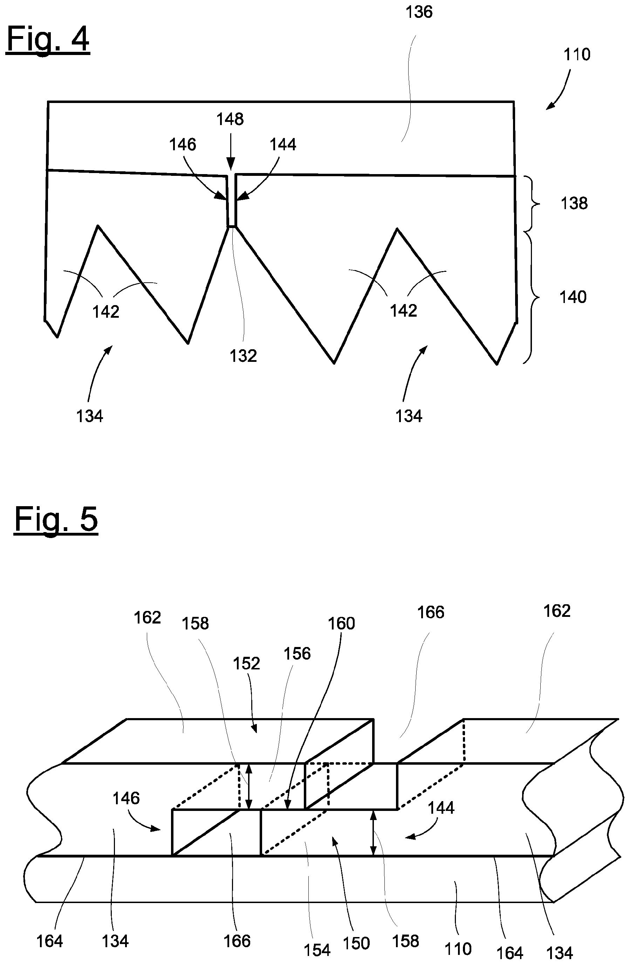

Figur 4 zeigt eine vergrößerte, schematische Darstellung des Rotorblatts 110 mit zwei angrenzenden Anbauelementen 134. Jedes Anbauelement 134 weist ein erstes Ende 144 und ein zweites gegenüberliegendes Ende 146 des Befestigungsabschnitts 138 auf, mit denen sich zwei Anbauelemente 134 im am Rotorblatt 110 befestigten Zustand gegenüberliegen.

Um den in Figur 4 deutlich gezeigten durchgängigen Spalt 148 zu vermeiden, sind - wie in der Anordnung gemäß Figur 5 schematisch dargestellt - die Enden 144, 146 mit Kopplungsabschnitten 150, 152 versehen, die jeweils Laschen 154, 156 aufweisen. Die Laschen 154, 156 haben im Vergleich zum restlichen Befestigungsabschnitt 138 eine verringerte Laschendicke 158, wobei die Dicke 158 beider Laschen 154, 156 gleich ist bzw. sich zu der Gesamtdicke des restlichen Befestigungsabschnitts 138 addieren. Zwei Anbauelemente 134 können nun derart aneinander angrenzend angeordnet werden, dass die beiden Laschen 154, 156 überlappen und einen Überlappungsbereich 160 ausbilden. Die Oberseiten 162 (Außenseiten im bestimmungsgemäß montierten Zustand) und Unterseiten 164 der Anbauelemente 134 verlaufen bündig. Die im Bereich der Oberseiten 162 bzw. Unterseiten 164 entstehenden Räume 166, bei denen es sich nun nicht mehr um durchgängige Spalte handelt, können mit Dichtmaterial bzw. Klebstoff aufgefüllt werden, um beispielsweise eine ungewollte Geräuschentwicklung beim Durchströmen von Luft im Betrieb zu vermeiden.

Die Laschenausgestaltung erlaubt nicht nur eine Überlappung bei der gezeigten geradlinigen Anordnung zweier Anbauelemente 134, sondern auch eine winklige Anordnung, wie später noch anhand weiterer Figuren gezeigt ist.

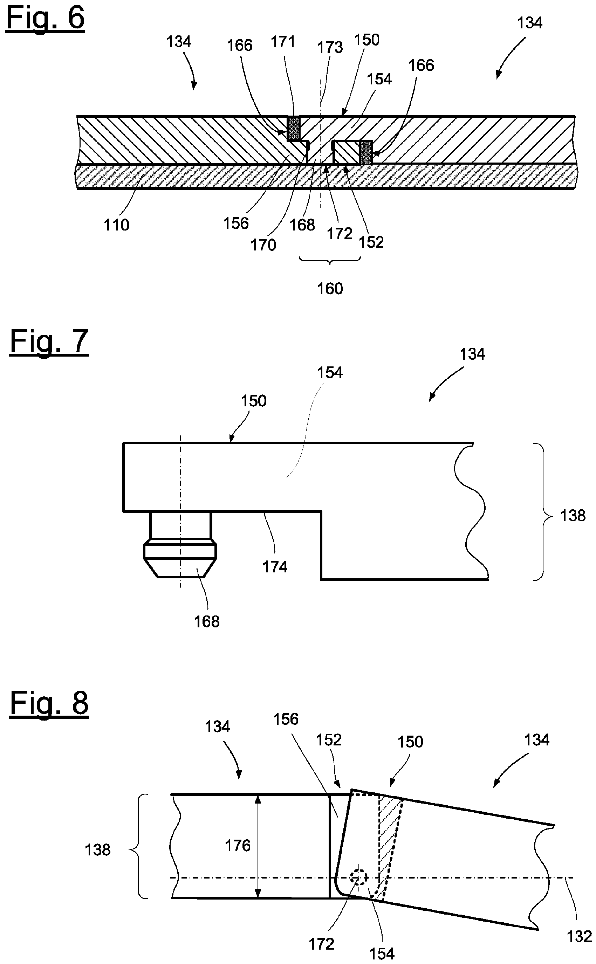

Figur 6 zeigt eine schematische Schnittansicht zweier gekoppelter Anbauelemente 134 gemäß einem Ausführungsbeispiel der Erfindung. Im Unterschied zu obigen Anbauelementen 134 zeichnen sich die Anbauelemente 134 gemäß Figur 6 dadurch aus, dass der erste Kopplungsabschnitt 150 einen Positionierstift 168 und der zweite Kopplungsabschnitt 152 eine Positionierausnehmung 170 aufweisen. Letztere ist als eine Bohrung ausgestaltet. Zudem sind die oben beschriebenen Räume 166 mit Klebstoff oder Dichtmaterial 171 gefüllt.

Figur 7 zeigt eine schematische, vergrößerte Darstellung des einen Anbauelements 134, bei welchem eine mögliche Ausgestaltung des Positionierstifts 168 besser zu erkennen ist.

Zur Kopplung der zwei Anbauelemente 134 gemäß dem Ausführungsbeispiel der Erfindung wird der Positionierstift 168 in die Positionierausnehmung 170 eingeführt, so dass die beiden Anbauelemente 134 ein Drehgelenk 172 ausbilden und zueinander schwenkbar um die Drehachse 173, die mit einer Stiftmittellängsachse zusammenfällt, sind.

Dies erleichtert die Positionierung mehrerer Anbauelemente 134 zueinander und damit die Montage am Rotorblatt 110 erheblich, wie eingangs beschrieben.

Figur 8 zeigt eine schematische Draufsicht auf die beiden gekoppelten Anbauelemente 134 gemäß der Figur 6, wobei eine winklige Anordnung zueinander ersichtlich ist (siehe gebogenen Doppelpfeil). Es sei erwähnt, dass aus Gründen der Übersichtlichkeit in Figur 8 auf die Darstellung der Verzahnung 140 sowie die Darstellung des Rotorblatts 110 verzichtet ist.

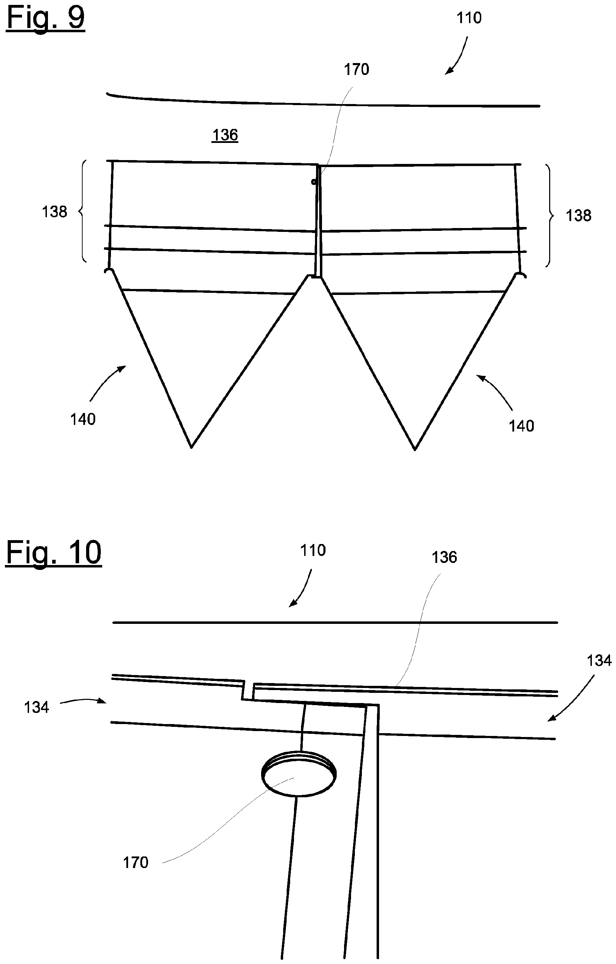

Figur 9 zeigt eine weitere Draufsicht auf die beiden Anbauelemente 134 der Figur 6 im am Rotorblatt 110 befestigten Zustand, wobei die Verzahnung 140 in Form jeweils eines Zahnes 142 zu erkennen ist. Wiederum ist eine winklige Anordnung gezeigt.

Figur 10 zeigt eine perspektivische Ansicht der Anordnung gemäß Figur 9 von unten, wobei auf die Darstellung des Rotorblattes 110 verzichtet ist. Die Positionierausnehmung 170 sowie der darin aufgenommene Positionierstift 168 sind gut zu erkennen.

Optional weist der Positionierstift 168 eine Sollbruchstelle auf, um wie eingangs erwähnt bei Bewegungen zweier gekoppelter Anbauelemente 134 definiert abscheren oder brechen zu können. Der abgescherte Stift 168 kann am Rotorblatt 110 verbleiben. Die Sollbruchstelle ist bevorzugt in einem Bereich einer Oberfläche 174 des ersten Kopplungsabschnitts 150 ausgebildet, von der der Positionierstift 168 absteht und die im Überlappungsbereich 160 in Kontakt mit dem zweiten Kopplungsabschnitt 152 bzw. der zweiten Lasche 156 ist (siehe Figur 7).

Optional verrastet oder verklemmt sich der Positionierstift 168 in der Positionierausnehmung 170, wodurch eine bessere Kopplung gewährleistet wird. Der Positionierstift 168 ist hierfür beispielsweise geschlitzt und gespreizt.

Weiterhin kann die Koppelstelle durch eine nicht gezeigte Dichtfolie an den Oberseiten 162 abgedeckt sind, wie eingangs beschrieben.

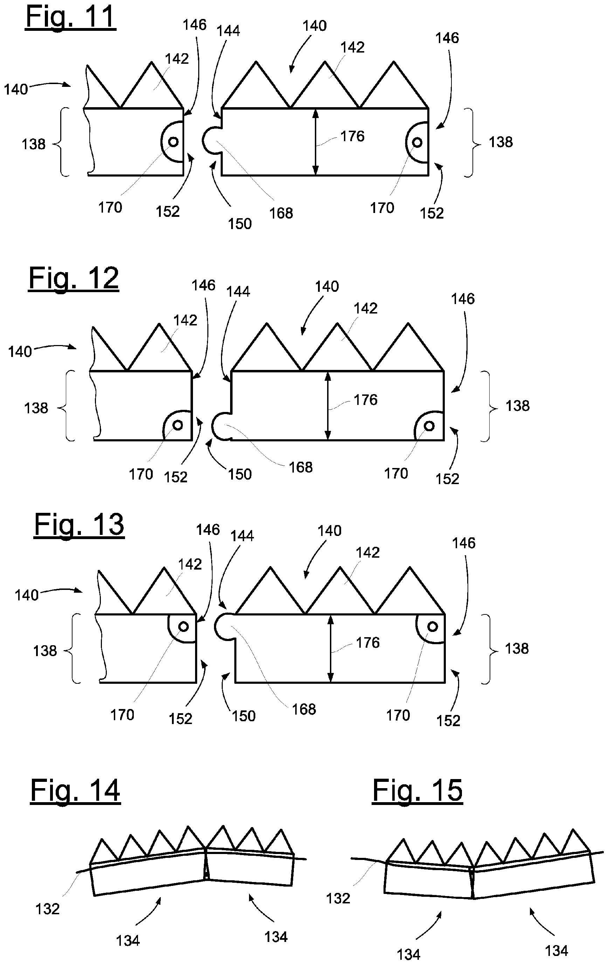

Wie beispielsweise die Figur 8 zeigt, erstrecken sich die Laschen 154, 156 über die gesamte Breite 176. Es sind jedoch auch andere Ausgestaltungen von Kopplungsabschnitten 150, 152 bzw. Laschen 154, 156 denkbar, wie in den Figuren 11 bis 13 gezeigt.

Die Figuren 11 bis 13 zeigen schematische Ansichten von gekoppelten Anbauelementen 134 gemäß weiteren Ausführungsbeispielen, wobei auf die Darstellung eines Rotorblatts 110 verzichtet ist und zudem unterschiedliche Koppelpositionen dargestellt sind.

Die Kopplungsabschnitte 150, 152 sind laschenartig bzw. taschenartig ausgebildet, wobei sich diese nicht über die gesamte Breite 176 erstrecken. Der zweite Kopplungsabschnitt 152 ist beispielsweise als eine Art Tasche ausgebildet, in die der als Lasche ausgebildete erste Kopplungsabschnitt 150 eingelegt wird. Die Lasche des ersten Kopplungsabschnitts 150 steht am ersten Ende 144 ab, während die Tasche am zweiten Ende 146 nach innen versetzt angeordnet ist.

Gemäß dem in Figur 11 gezeigten Ausführungsbeispiel sind der Positionierstift 168 und die korrespondierende Positionierausnehmung 170 mittig zwischen dem Verzahnungsabschnitt 140 und einer dem Verzahnungsabschnitt 140 abgewandten Längsseite 178 des Befestigungsabschnitts 138 angeordnet. Dadurch ist das Drehgelenk im gekoppelten Zustand beider Anbauelemente 134 mittig angeordnet, was beispielsweise bei einem geraden Verlauf oder bei einer leichten Krümmung der Profilendkante 132 geeignet ist.

Gemäß dem in Figur 12 gezeigten Ausführungsbeispiel sind der Positionierstift 168 und die korrespondierende Positionierausnehmung 170 im Bereich der dem Verzahnungsabschnitt 140 abgewandten Längsseite 178 des Befestigungsabschnitts 138 angeordnet. Dies eignet sich beispielsweise für einen entsprechend gekrümmten Verlauf der Profilendkante 132, wie er schematisch in Figur 14 angedeutet ist.

Gemäß dem in Figur 13 gezeigten Ausführungsbeispiel sind der Positionierstift 168 und die korrespondierende Positionierausnehmung 170 im Bereich des Verzahnungsabschnitts 140 angeordnet, also nahe am Zahngrund der Zähne 142. Dies eignet sich beispielsweise für einen entsprechend gekrümmten Verlauf der Profilendkante 132, wie er schematisch in Figur 15 angedeutet ist.

Optional können wie eingangs beschrieben mehrere Positionierstifte und korrespondierend dazu mehrere Positionierausnehmungen an den jeweiligen Kopplungsabschnitten 150, 152 vorgesehen sein, wobei dann bei der Montage je nach Verlauf der Profilendkante 132 bis auf einen Positionierstift alle Positionierstifte abgebrochen werden, beispielsweise an entsprechenden Sollbruchstellen. Dadurch kann bei der Montage flexibel die Position des Drehgelenks zwischen zwei miteinander zu koppelnden Anbauelementen gewählt werden.

### BEZUGSZEICHENLISTE

- 100: Windenergieanlage
- 102: Turm
- 104: Fundament
- 106: Gondel
- 108: Rotor
- 110: Rotorblatt, Windenergieanlagenrotorblatt
- 112: Rotornabe
- 114: Rotorblattwurzelbereich
- 116: Übergangsbereich
- 118: Profilbereich
- 120: Längsachse
- 122: Druckseite
- 124: Saugseite
- 126: blattwurzelseitiges Ende
- 128: blattspitzenseitiges Ende
- 130: Profilnasenkante
- 132: Profilendkante
- 134: Anbauelement
- 136: Oberfläche
- 138: Befestigungsabschnitt
- 140: Verzahnungsabschnitt
- 142: Zahn
- 144: erstes Ende
- 146: zweites Ende
- 148: Spalt
- 150: erster Kopplungsabschnitt
- 152: zweiter Kopplungsabschnitt
- 154: erste Lasche
- 156: zweite Lasche
- 158: Laschendicke
- 160: Überlappungsbereich
- 162: Oberseite
- 164: Unterseite
- 166: Raum
- 168: Positionierstift
- 170: Positionierausnehmung
- 171: Klebstoff
- 172: Drehgelenk
- 173: Drehachse
- 174: Oberfläche des ersten Kopplungsabschnitts
- 176: Breite
- 178: Längsseite

## Patentansprüche

1. Anbauelement (134) für ein Windenergieanlagenrotorblatt (110), aufweisend
einen aerodynamisch wirksamen Abschnitt zum Beeinflussen einer aerodynamischen Eigenschaft des Windenergieanlagenrotorblatts (110), und
einen streifenförmigen Befestigungsabschnitt (138), der ausgebildet ist auf eine Oberfläche (136) des Windenergieanlagenrotorblatts (110) angebracht zu werden, wobei
der streifenförmige Befestigungsabschnitt (138) ein erstes Ende (144) mit einem ersten Kopplungsabschnitt (150) aufweist, **dadurch gekennzeichnet, dass**
der erste Kopplungsabschnitt (150) entweder einen Positionierstift (168) aufweist, der in eine Positionierausnehmung (170) eines Kopplungsabschnitts (152) eines weiteren Anbauelements (134) einführbar ist, so dass das Anbauelement (134) schwenkbar mit dem weiteren Anbauelement (134) koppelbar ist, oder eine Positionierausnehmung (170) aufweist, die zur Aufnahme eines Positionierstifts (168) eines Kopplungsabschnitts (150) eines weiteren Anbauelements (134) ausgebildet ist, so dass das weitere Anbauelement (134) schwenkbar mit dem Anbauelement (134) koppelbar ist.

2. Anbauelement (134) nach Anspruch 1, wobei der streifenförmige Befestigungsabschnitt (138) ein dem ersten Ende (144) gegenüberliegendes zweites Ende (146) mit einem zweiten Kopplungsabschnitt (152) aufweist, der entweder einen Positionierstift (168) aufweist, der in eine Positionierausnehmung (170) eines Kopplungsabschnitts (152) eines weiteren Anbauelements (134) einführbar ist, so dass das Anbauelement (134) schwenkbar mit dem weiteren Anbauelement (134) koppelbar ist, oder eine Positionierausnehmung (170) aufweist, die zur Aufnahme eines Positionierstifts (168) eines Kopplungsabschnitts (150) eines weiteren Anbauelements (134) ausgebildet ist, so dass das weitere Anbauelement (134) schwenkbar mit dem Anbauelement (134) koppelbar ist.

3. Anbauelement (134) nach Anspruch 1 oder 2, wobei der erste und/oder der zweite Kopplungsabschnitt (150, 152) derart ausgebildet sind, dass der Positionierstift (168) und/oder die Positionierausnehmung (170) eines oder beider Kopplungsabschnitte (150, 152) im Bereich einer dem aerodynamisch wirksamen Abschnitt abgewandten Längsseite (178) des Befestigungsabschnitts (138) angeordnet sind.

4. Anbauelement (134) nach Anspruch 1 oder 2, wobei der erste und/oder der zweite Kopplungsabschnitt (150, 152) derart ausgebildet sind, dass der Positionierstift (168) und/oder die Positionierausnehmung (170) eines oder beider Kopplungsabschnitte (150, 152) im Bereich des aerodynamisch wirksamen Abschnitts (140) angeordnet sind.

5. Anbauelement (134) nach Anspruch 1 oder 2, wobei der erste und/oder der zweite Kopplungsabschnitt (150, 152) derart ausgebildet sind, dass der Positionierstift (168) und/oder die Positionierausnehmung (170) eines oder beider Kopplungsabschnitte (150, 152) in einem mittleren Bereich zwischen dem aerodynamisch wirksamen Abschnitt und einer dem aerodynamisch wirksamen Abschnitt abgewandten Längsseite (178) des Befestigungsabschnitts (138) angeordnet sind.

6. Anbauelement (134) nach einem der vorhergehenden Ansprüche, wobei der erste Kopplungsabschnitt (150) und/oder der zweite Kopplungsabschnitt (152) einen Positionierstift (168) aufweist, der eine Sollbruchstelle aufweist.

7. Anbauelement (134) nach Anspruch 6, wobei die Sollbruchstelle in einem Bereich einer Oberfläche (174) des ersten Kopplungsabschnitts (150) ausgebildet ist, von der der Positionierstift (168) absteht.

8. Anbauelement (134) nach einem der vorhergehenden Ansprüche, wobei der erste Kopplungsabschnitt (150) und/oder der zweite Kopplungsabschnitt (152) einen der Positionierstift (168) aufweist, der ausgebildet ist nach dem Einführen in eine entsprechende Positionierausnehmung (170) eines weiteren Anbauelements (134) mit dem entsprechenden Kopplungsabschnitt (152) des weiteren Anbauelements (134) zu verrasten oder zu verklemmen.

9. Anbauelement (134) nach einem der vorhergehenden Ansprüche, wobei der Positionierstift (168) des ersten und/oder zweiten Kopplungsabschnitts (150, 152) geschlitzt ist.

10. Anbauelement (134) nach einem der vorhergehenden Ansprüche, wobei der erste Kopplungsabschnitt (150) und/oder der zweite Kopplungsabschnitt (152) mehrere Positionierstifte (168) und/oder Positionierausnehmungen (170) aufweisen, wobei die Positionierstifte (168) jeweils eine Sollbruchstelle aufweisen.

11. Anbauelement (134) nach einem der vorhergehenden Ansprüche, wobei der erste und/oder der zweite Kopplungsabschnitt (150, 152) ausgebildet sind, in einem mit einem entsprechenden Kopplungsabschnitt (150, 152) des weiteren Anbauelements (134) gekoppelten Zustand einen Überlappungsbereich (160) auszubilden.

12. Anbauelement (134) nach Anspruch 11, wobei der erste Kopplungsabschnitt (150) als eine erste Lasche (154) und der zweite Kopplungsabschnitt (152) als eine zweite Lasche (156) ausgebildet sind, die jeweils eine im Vergleich zum restlichen Befestigungsabschnitt (138) verringerte Dicke (158) aufweisen.

13. Anordnung für ein Windenergieanlagenrotorblatt (110), aufweisend zwei Anbauelemente (134) nach einem der Ansprüche 1 bis 12, wobei
die beiden Anbauelemente (134) angrenzend aneinander angeordnet sind,
ein Kopplungsabschnitt (150) des einen Anbauelements (134) mit einem Kopplungsabschnitt (152) des anderen Anbauelements (134) derart gekoppelt ist, dass ein Positionierstift (168) in eine korrespondierende Positionierausnehmung (170) eingeführt ist.

14. Anordnung nach Anspruch 13, wobei die beiden Anbauelemente (134) im Bereich der angrenzenden Enden (144, 146) an ihren Außenseiten mit einer Dichtfolie überzogen sind.

15. Windenergieanlagenrotorblatt (110), aufweisend eine Profilendkante, und ein Anbauelement (134) nach einem der Ansprüche 1 bis 12, wobei das Anbauelement (134) mittels des Befestigungsabschnitts (138) entlang der Profilendkante mit einer Oberfläche (136) des Windenergieanlagenrotorblatts (110) verbunden ist.

## Claims

1. An attachment element (134) for a wind turbine rotor blade (110), comprising
an aerodynamically effective portion for influencing an aerodynamic property of the wind turbine rotor blade (110), and
a strip-shaped fastening portion (138) formed to be mounted to a surface (136) of the wind turbine rotor blade (110), wherein
the strip-shaped fastening portion (138) comprises a first end (144) with a first coupling portion (150), **characterized in that**
the first coupling portion (150) either comprises a positioning pin (168) which is insertable in a positioning recess (170) of a coupling portion (152) of a further attachment element (134) so that the attachment element (134) is pivotably couplable to the further attachment element (134), or a positioning recess (170) which is formed for receiving a positioning pin (168) of a coupling portion (150) of a further attachment element (134) so that the further attachment element (134) is pivotably couplable to the attachment element (134).

2. The attachment element (134) according to claim 1, wherein the strip-shaped fastening portion (138) comprises a second end (146) opposite the first end (144) and having a second coupling portion (152) which either comprises a positioning pin (168) which is insertable in a positioning recess (170) of a coupling portion (152) of a further attachment element (134) so that the attachment element (134) is pivotably couplable to the further attachment element (134), or a positioning recess (170) which is formed for receiving a positioning pin (168) of a coupling portion (150) of a further attachment element (134) so that the further attachment element (134) is pivotably couplable to the attachment element (134).

3. The attachment element (134) according to claim 1 or 2, wherein the first and/or the second couplings portion (150, 152) are formed such that the positioning pin (168) and/or the positioning recess (170) of one or both coupling portions (150, 152) are arranged in the area of a longitudinal side (178) of the fastening portion (138) facing away from the aerodynamically effective portion.

4. The attachment element (134) according to claim 1 or 2, wherein the first and/or the second coupling portion (150, 152) are formed such that the positioning pin (168) and/or the positioning recess (170) of one or both coupling portions (150, 152) are arranged in the area of the aerodynamically effective portion (140).

5. The attachment element (134) according to claim 1 or 2, wherein the first and/or the second coupling portion (150, 152) are formed such that the positioning pin (168) and/or the positioning recess (170) of one or both coupling portions (150, 152) are arranged in a central area between the aerodynamically effective portion and a longitudinal side (178) of the fastening portion (138) facing away from the aerodynamically effective portion.

6. The attachment element (134) according to any one of the preceding claims, wherein the first coupling portion (150) and/or the second coupling portion (152) comprise a positioning pin (168) which comprises a predetermined breaking point.

7. The attachment element (134) according to claim 6, wherein the predetermined breaking point is formed in an area of a surface (174) of the first coupling portion (150) from which the positioning pin (168) protrudes.

8. The attachment element (134) according to any one of the preceding claims, wherein the first coupling portion (150) and/or the second coupling portion (152) comprise the positioning pin (168) which is formed to lock or jam with a corresponding coupling portion (152) of the further attachment element (134) after having been inserted into a corresponding positioning recess (170) of the further attachment element (134).

9. The attachment element (134) according to any one of the preceding claims, wherein the positioning pin (168) of the first and/or second coupling portion (150, 152) is slotted.

10. The attachment element (134) according to any one of the preceding claims, wherein the first coupling portion (150) and/or the second coupling portion (152) comprise several positioning pins (168) and/or positioning recesses (170), wherein the positioning pins (168) each comprise a predetermined breaking point.

11. The attachment element (134) according to any one of the preceding claims, wherein the first and/or the second coupling portion (150, 152) are formed to form an overlapping area (160) in a state coupled to a corresponding coupling portion (150, 152) of the further attachment element (160).

12. The attachment element (134) according to claim 11, wherein the first coupling portion (150) is formed as a first tab (154), and the second coupling portion (152) is formed as a second tab (156), which each comprise a reduced thickness as compared to the remaining fastening portion (138).

13. An arrangement for a wind turbine rotor blade (110), comprising two attachment elements (134) according to any one of claims 1 to 12, wherein
the two attachment elements (134) are arranged to be adjacent to one another,
a coupling portion (150) of the one attachment element (134) is coupled to a coupling portion (152) of the other attachment element (134) such that a positioning pin (168) is inserted into a corresponding positioning recess (170) .

14. The arrangement according to claim 13, wherein the two attachment elements (134) are coated at their outer sides in the area of the adjacent ends (144, 146) with a sealing foil.

15. A wind turbine rotor blade (110), comprising a profile end edge and an attachment element (134) according to any one of claims 1 to 12, wherein the attachment element (134) is connected to a surface (136) of the wind turbine rotor blade (110) along the profile end edge by means of the fastening portion (138).

## Revendications

1. Élément rapporté (134) pour une pale de rotor d'énergie éolienne (110), présentant
une section aérodynamiquement efficace destinée à influencer une propriété aérodynamique de la pale de rotor d'éolienne (110), et
une section de fixation (138) en forme de bande qui est constituée pour être appliquée sur une surface (136) de la pale de rotor d'éolienne (110), sachant que
la section de fixation (138) en forme de bande présente une première extrémité (144) avec une première section de couplage (150),
**caractérisé en ce que**
la première section de couplage (150) soit présente un pion de positionnement (168) qui est insérable dans un évidement de positionnement (170) d'une section de couplage (152) d'un élément rapporté (134) supplémentaire de sorte que l'élément rapporté (134) soit puisse être couplé de manière pivotante à l'élément rapporté (134) supplémentaire, soit présente un évidement de positionnement (170) qui est constitué pour recevoir un pion de positionnement (168) d'une section de couplage (150) d'un élément rapporté (134) supplémentaire de sorte que l'élément rapporté (134) supplémentaire puisse être couplé de manière pivotante à l'élément rapporté (134).

2. Élément rapporté (134) selon la revendication 1, sachant que la section de fixation (138) en forme de bande présente une deuxième extrémité (146) opposée à la première extrémité (144) avec une deuxième section de couplage (152) qui soit présente un pion de positionnement (168) qui est insérable dans un évidement de positionnement (170) d'une section de couplage (152) d'un élément rapporté (134) supplémentaire de sorte que l'élément rapporté (134) puisse être couplé de manière pivotante à l'élément rapporté (134) supplémentaire, soit présente un évidement de positionnement (170) qui est constitué pour recevoir un pion de positionnement (168) d'une section de couplage (150) d'un élément rapporté (134) supplémentaire de sorte que l'élément rapporté (134) supplémentaire puisse être couplé de manière pivotante à l'élément rapporté (134).

3. Élément rapporté (134) selon la revendication 1 ou 2, sachant que la première et/ou la deuxième section de couplage (150, 152) sont constituées de telle manière que le pion de positionnement (168) et/ou l'évidement de positionnement (170) d'une ou des deux sections de couplage (150, 152) soient disposés dans la zone d'un côté longitudinal (178) de la section de fixation (138) opposé à la section aérodynamiquement efficace.

4. Élément rapporté (134) selon la revendication 1 ou 2, sachant que la première et/ou la deuxième section de couplage (150, 152) sont constituées de telle manière que le pion de positionnement (168) et/ou l'évidement de positionnement (170) d'une ou des deux sections de couplage (150, 152) soient disposés dans la zone de la section aérodynamiquement efficace (140).

5. Élément rapporté (134) selon la revendication 1 ou 2, sachant que la première et/ou la deuxième section de couplage (150, 152) sont constituées de telle manière que le pion de positionnement (168) et/ou l'évidement de positionnement (170) d'une ou des deux sections de couplage (150, 152) soient disposés dans une zone médiane entre la section aérodynamiquement efficace et un côté longitudinal (178) de la section de fixation (138) opposé à la section aérodynamiquement efficace.

6. Élément rapporté (134) selon l'une des revendications précédentes, sachant que la première section de couplage (150) et/ou la deuxième section de couplage (152) présentent un pion de positionnement (168) qui présente un point de rupture théorique.

7. Élément rapporté (134) selon la revendication 6, sachant que le point de rupture théorique est constitué dans une zone d'une surface (174) de la première section de couplage (150) d'où se dresse le pion de positionnement (168).

8. Élément rapporté (134) selon l'une des revendications précédentes, sachant que la première section de couplage (150) et/ou la deuxième section de couplage (152) présente un pion de positionnement (168) qui est constitué pour s'encliqueter ou se caler avec la section de couplage (152) correspondante de l'élément rapporté (134) supplémentaire après l'insertion dans un évidement de positionnement (170) correspondant d'un élément rapporté (134) supplémentaire.

9. Élément rapporté (134) selon l'une des revendications précédentes, sachant que le pion de positionnement (168) de la première et/ou de la deuxième section de couplage (150, 152) est fendu.

10. Élément rapporté (134) selon l'une des revendications précédentes, sachant que la première section de couplage (150) et/ou la deuxième section de couplage (152) présentent plusieurs pions de positionnement (168) et/ou évidements de positionnement (170), sachant que les pions de positionnement (168) présentent respectivement un point de rupture théorique.

11. Élément rapporté (134) selon l'une des revendications précédentes, sachant que la première et/ou la deuxième section de couplage (150, 152) sont constituées pour constituer une zone de chevauchement (160) dans un état couplé à une section de couplage (150, 152) correspondante de l'élément rapporté (134) supplémentaire.

12. Élément rapporté (134) selon la revendication 11, sachant que la première section de couplage (150) est constituée comme première languette (154) et la deuxième section de couplage (152) comme deuxième languette (156) qui présentent respectivement une épaisseur (158) réduite en comparaison avec la section de fixation (138) restante.

13. Agencement pour une pale de rotor d'éolienne (110), présentant deux éléments rapportés (134) selon l'une des revendications 1 à 12, sachant que
les deux éléments rapportés (134) sont disposés de manière contiguë l'un à l'autre,
une section de couplage (150) de l'un élément rapporté (134) est couplé à une section de couplage (152) de l'autre élément rapporté (134) de telle manière qu'un pion de positionnement (168) soit inséré dans un évidement de positionnement (170) correspondant.

14. Agencement selon la revendication 13, sachant que les deux éléments rapportés (134) sont revêtus d'une feuille d'étanchéité sur leurs côtés extérieurs dans la zone des extrémités (144, 146) contiguës.

15. Pale de rotor d'éolienne (110), présentant une arête d'extrémité de profil, et un élément rapporté (134) selon l'une des revendications 1 à 12, sachant que l'élément rapporté (134) est relié à une surface (136) de la pale de rotor d'éolienne (110) moyennant la section de fixation (138) le long de l'arête d'extrémité de profil.
